# EUROPEAN PATENT APPLICATION

(11) **EP 3 291 631 A1**
(43) Date of publication of application: **07.03.2018**
(21) Application number: 16186897.1
(22) Date of filing: 01.09.2016
(51) Int. Cl.: H04W 76/02, H04W 48/20, H04W 36/00, H04W 74/00

(54) **METHOD FOR SETTING UP A COMMUNICATION LINK OF A WIRELESS TERMINAL WITH A CELLULAR NETWORK**

(71) Applicant: Gemalto M2M GmbH, 81541 Munich (DE)
(72) Inventor: BREUER, Volker, 16727 Boetzow (DE); ULRICH, Thomas, 67098 Bad Dürkheim (DE); WEHMEIER, Lars, 14612 Falkensee (DE)
(74) Representative: Grevin, Emmanuel

(57) **Abstract**

The present invention relates to a method for a cellular network of setting up a communication link with a wireless terminal, the cellular network comprising at least one anchor base node and at least one non-anchor base node, the anchor base node being capable of broadcasting at least one signal channel, the non-anchor base node being capable of beamforming based communication, comprising the step for the anchor base node of:
- receiving (M1) from the wireless terminal a communication request comprising a request to communicate with at least one of the non-anchor base node,
- informing (M3) the at least one non-anchor base node about the retrieved communication request,
- instructing (M6) the requesting wireless terminal to transmit a synchronization sequence,
further comprising the steps for the non-anchor base node of:
- scanning (M5) its coverage area for receiving of the synchronization sequence and
- adapting (M8) transmit beamforming related to the reception of said synchronization sequence from the wireless terminal, and
- sending (M9) a message to the wireless terminal, using said transmit beamforming.

## Description

### FIELD OF THE INVENTION

The present invention relates to a method for a cellular network of setting up a communication link with a wireless terminal.

The invention also pertains to a cellular network using said method.

The invention further relates to a wireless terminal operating with said cellular network.

### BACKGROUND OF THE INVENTION

In the area of wireless cellular communication the requirements from the wireless terminal side are getting stronger in particular in terms of data throughput. For the coming technology standard of 5G there are currently a couple of feasibility studies ongoing which show that with base nodes, resp. eNodeBs operating in higher frequency area than today's known 3G and 4G base node and with beamforming high data rates can be achieved. The beamforming is required to overcome the increasing pathloss which inevitably results from the increasing frequency.

What these studies do not examine by now is how such a communication link is set up. Before the wireless terminal can send or receive data, it needs to camp on a capable base node and request the necessary resources.

For such operations it was in the known standards before 5G required to read system information from a broadcast channel which is emitted omnidirectional by the base node, and which covers the cell area.

5G is intended to operate in frequency ranges up to 60GHz or even higher. In the lower frequency range, as used today e.g. up to 6GHZ, broadcast mechanisms can be used to provide relevant information for camping or information necessary for an access request to the wireless terminals.

In the area beyond 6 GHz an omnidirectional broadcast would on the other hand lead to a cell size which would result in an exponential increase in base nodes - and of course costs related to it for the network operators.

Alternatively the base node would need a large amount of transmit power and thus transmit the information inefficiently or beamformed to very small areas.

Hence, there is a need for alternative measures to be able to set up a communication link between a wireless terminal with not predictable location and a base node supporting high data rates in higher frequency ranges by means of beamforming on the location of the requesting wireless terminal.

It is therefore the goal of present invention to propose a solution for setting up a communication link of a wireless terminal with a base node of a cellular network, in particular supporting 5G technology standard.

Further alternative and advantageous solutions would, accordingly, be desirable in the art.

### SUMMARY OF THE INVENTION

For this it is according to a first aspect of the invention suggested a method for a cellular network of setting up a communication link with a wireless terminal according to claim 1. It is further suggested according to a second aspect of the invention a cellular network according to claim 9. According to a third aspect of the invention it is proposed a wireless terminal configured to operate with said cellular network according to claim 12.

According to the first aspect of the invention it is proposed a method for a cellular network of setting up a communication link with a wireless terminal, the cellular network comprising at least one anchor base node and at least one non-anchor base node, the anchor base node being capable of broadcasting at least one signal channel, the non-anchor base node being capable of beamforming based communication, comprising the step for the anchor base node of:
- receiving from the wireless terminal a communication request comprising a request to communicate with at least one of the non-anchor base node,
- informing the at least one non-anchor base node about the retrieved communication request,
- instructing the requesting wireless terminal to transmit a synchronization sequence,
further comprising the steps for the non-anchor base node of:
- scanning its coverage area for receiving of the synchronization sequence and
- adapting transmit beamforming related to the reception of said synchronization sequence from the wireless terminal, and
- sending a message to the wireless terminal, using said transmit beamforming.

The inventive method relates to a cellular network of a new generation which is foremost differing from previously known cellular network according to the technology standards 2G (GSM, GPRS, EDGE), 3G (UMTS, HSDPA), or 4G (LTE, LTE-Advanced, LTE-Cat M) by that the base nodes of the cellular network differ materially in their capability and tasks. According to the invention it is suggest that at least the following two types of base nodes, known e.g. in LTE as eNodeB, exists:
- anchor base nodes and
- non-anchor base nodes.

The two types of base nodes differ at least in that the anchor base node is capable of broadcasting data, while the non-anchor base node is capable of beamforming based communication. The effect of this difference is, that the anchor base node reaches a plurality of wireless terminal in the cell area, while the non-anchor base node is capable of carrying out data transmissions with a high data transmission rates to a limited number of dedicates wireless terminals.

In the context of the new 5G standard, also known as New Radio (NR), the non-anchor base nodes preferably operate in a high frequency range from 6 up to 60 GHz, while anchor base nodes are operating in frequencies below 6 GHz. It is in particular possible to re-use legacy base nodes like eNodeBs known from 4G/LTE or nodeBs of 3G cellular networks as anchor base nodes, while also the use of 5G base nodes deployed in said frequency range is envisaged.

Due to the need of beamforming before setting up a communication stream, the non-anchor base node needs first to know where in its coverage area the wireless terminal is located, and to tune its beam in order to be able to receive data from and send data to the wireless terminal.

The inventive method starts with a wireless terminal which is not yet registered or connected with the non-anchor base node, but is camping or about to camp on the anchor base node of the cellular network. The exercise executed for camping on the anchor base node preferably relates to the procedures known from previous technology standards.

When the wireless terminal is planning to transmit data to the cellular network, preferably a large amount of data which is supposed to be transmitted in a short time, then the anchor base node where the wireless terminal is camping on receives a request from the wireless terminal for communicating with one of the non-anchor base nodes of the cellular network. Generally such request for data transmission resources are known, in particular RRC (radio resource control) messages, they could be reused or refined for this context as well.

For mobile terminated communication the wireless terminals responds on a paging by the anchor base node, where the wireless terminal is camping on, with a response message, which has the same effect as the communication request. In the following the communication request is understood both as for the mobile originated and the mobile terminated communication.

The anchor base node has in response to getting a valid communication request from a wireless terminal the task to manage the setup of the communication connection with the at least one non-anchor base node. In addition it is noted that the communication with the non-anchor base node may be later the only existing active communication link. Alternatively it may exist in parallel a link established with the anchor base node. However, the procedure of setting /establishing the communication link with the non-anchor base node remains unchanged for both scenarios with respect to the assistance through the anchor base node in the setup.

There are many possibilities to select which non-anchor base node is selected. One comprises an indication by the wireless terminal, in particular based on earlier communication executions.

Another possibility comprises according to a preferred embodiment the step for the anchor base node of estimating which of the at least one non-anchor base nodes is capable of serving the wireless terminal, and wherein the step of informing the non-anchor base node is carried out for each of the estimated non-anchor base node.

With this embodiment the anchor base node estimates the capability of the non-anchor base node by considering the band capabilities, the service capabilities, the spatial positioning in relationship to the wireless terminal and possible speed adaptations. This embodiment encompasses that even more than one non-anchor base node is appropriate for the wireless terminal. Preferably it is proposed that step of estimating further comprises:
- receiving measurement message relating to total received wideband power transmitted by wireless terminal,
- and wherein the step of estimating considers said measurement message.

This embodiment is based on measurements carried out at the wireless terminal and transmitted comparable with the known measurement reports to its active base node. Such measurement reports are transmitted either independently or on request from the base node. With such measurements the anchor base node is in the position - based on the provided total received wideband power resp. wideband measurements - to improve the estimation about which non-anchor base node would be appropriate for the requesting wireless terminal.

Alternatively it is proposed that the anchor base node is further comprising a memory, and the anchor base node is configured to store in said memory an indication about the non-anchor base node where the wireless terminal is assigned to, and wherein the estimation of the non-anchor base node for the wireless terminal considers the stored non-anchor base node.

With this alternative embodiment the step of estimation comprises that a non-anchor base node previously used by the respective wireless terminal is used again. This embodiment is in particular preferable for wireless terminals operating stationary. Therefore - at least for a first step - the same non-anchor base node is selected again, advantageously under the condition that the non-anchor base node is also capable of serving the communication request of the wireless terminal.

After identifying the at least one non-anchor base node which is capable of serving the wireless terminal, the anchor base node sends an information message to the non-anchor base node, indicating that said wireless terminal is requesting to setup a communication session. Preferably the base nodes of the cellular network are capable of exchanging messages among each other, either through a direct connection or via network components who are configured to dispatch messages between nodes of the cellular network.

After doing so the anchor base node sends as a response to the wireless terminal's request a message instructing the wireless terminal to transmit a specific synchronization sequence.

This synchronization sequence is a sequence of signals which allows a receiving entity to distinguish said wireless terminal from other wireless terminals requesting a communication session as well. Preferably the synchronization sequence is repeatedly transmitted, starting again directly after finishing. The synchronization sequence used is a pre-known bit stream which can be realized/received with a matched filter and hence has good recognition and reception potential. The sequence may be comparable to the PSS or SSS (primary or secondary synchronization sequences) known from LTE or 3G.

Besides the synchronization sequence or related information also information in the frequency domain will be provided i.e. on which frequency or small frequency range said transmission is supposed to be transmitted by the wireless terminal. Hereby the estimate and evaluation of the transmit frequency can be evaluated in good proximity giving that the wireless terminal is synchronized to the anchor base nodes frequency. Small frequency offsets may occur in related transmissions in case of very large differences in the frequency used by anchor and non-anchor base node.

According to a preferred embodiment the synchronization sequence is determined by at least one out of the group of:
- selecting in the wireless terminal from a list of predefined synchronization sequence based on received instruction,
- creating synchronization sequence in the wireless terminal by receiving parameters for a given calculation method,
- providing the raw synchronization sequence by one out of the anchor base node and non-anchor base node.

This embodiment encompasses the proposed means for exchanging the synchronization sequence. It is preferably executed prior to or in conjunction with the step of instructing the requesting wireless terminal to transmit a synchronization sequence.

According to the first alternative the wireless terminal has access to, preferably by locally storing, a list of predefined synchronization sequences. The stored synchronization sequences comprises additionally identifications, like a code number. With that the wireless terminal is capable of selecting a respective synchronization sequence after receiving said identification. Said receiving step is preferably part of the instructions from the anchor base node to the wireless terminal. This option of instructing the wireless terminal to transmit the synchronization sequence simplifies the task of instructing, as the synchronization sequence is selected simply by an identification.

In the second alternative it is proposed that the synchronization sequence is determined based on parameters for a given calculation method, which parameters are provided preferably as part of the instruction from the anchor base node to the wireless terminal. The wireless terminal is configured to create the synchronization sequence with said calculation method, based on the received parameters. This option saves storing synchronization sequences in the wireless terminal, it suffices to have the calculation method.

Moreover a wider variety of synchronization sequences is possible, not limited by memory resources in the wireless terminal.

The third alternative is to provide the synchronization sequence as raw data transmission as part of the instructions to the wireless terminal. This option requires the most bandwidth for the instructions, but has the lowest preconditions and adjustment tasks. It is a fully flexible solution and can be implemented cellular network specific.

For all alternatives the selection of the synchronization sequence is either done by the anchor base node or the non-anchor base node. When the non-anchor base node is determining the synchronization sequence it provides it via intra network communication to the anchor base node which then provides the respective instruction to the wireless terminal.

In case the anchor base node determines the synchronization sequence it needs to provide the respective indication both to the non-anchor base node and the requesting wireless terminal.

Preferably it is proposed that the step of instructing the wireless terminal further comprises the step of transmitting a transmission pattern for said synchronization sequence comprising at least one out of:
- selecting a transmission frequency,
- selecting time resources,
- selecting a frequency hopping sequence.

This advantageous embodiment additionally informs the wireless terminal of a transmission pattern comprising at least one parameter with that the transmission of the synchronization sequence is to be carried out, in order to simplify for the non-anchor base node to receive and detect the synchronization sequence accurately and quickly.

According to another preferred embodiment it is proposed the step for the non-anchor base node of:
- creating instruction for transmission of at least one of the synchronization sequence and the transmission pattern,
- sending said instruction to the anchor base node for forwarding to the wireless terminal.

With that it is the non-anchor base node which makes the determination of the respective information regarding the synchronization sequence and/or the transmission pattern, and provides it to the anchor base node for transmission to the wireless terminal.

Alternatively it is proposed the step for the anchor base node of:
- creating instruction for transmission of the synchronization sequence and the transmission pattern to the wireless terminal,
- forwarding at least information relating to said synchronization sequence to the non-anchor base node.

This is the alternative to the previous option, according to that the anchor base node is taking the active role and informs both the wireless terminal and the non-anchor base node about which and how the synchronization sequence is transmitted by the wireless terminal.

It is further encompassed by the invention that the definition of the synchronization sequence and of the transmission pattern are defined on different base nodes.

Basically the step of instruction the wireless terminal completes the task of the anchor base node in terms of setting up the communication connection, at least provided the following steps appear successful. When the wireless terminal is operating with the non-anchor base node after successful setting up of a connection, it is not mandatory that the camping relationship to the anchor base node remains active in parallel. Compared to the known situation of idle mode and connected mode, closing the connection may mean a reselection to another base node compared to the one that served the active connection. This concept is preferably applicable to present invention, in that after closing the connection the wireless terminal looks for another anchor base node for camping, whereby the previously used anchor base node - in particular for stationary devices - is preferably selected again.

Following the instruction to the wireless terminal it is expected that the wireless terminal- at least for a predetermined time - transmits the synchronization sequence.

Preferably the synchronization sequence is transmitted by the wireless terminal according to the transmission pattern, which was received from the anchor base node.

Then the non-anchor base node is through the request of the anchor base node instructed to scan its coverage area in order to detect the synchronization sequence. For that the non-anchor base node comprises receiving circuitry and antenna installations which allow for the non-anchor base node listening in predetermined frequency ranges for transmitted sequences, whereby the receiving circuitry and antenna installation allow spatial scanning or beam selective scanning of its coverage area. Beam selective scanning means the base node provides multiple focused beams into various partially overlapping directions in parallel and is capable of receiving signals on each of them in parallel. Due to the high frequency used also for reception at the base node achieving additional antenna gain by e.g. beamforming is essential to overcome the high path loss.

Once the non-anchor base node receives the synchronization signal, it has found the right wireless terminal and is then capable of tuning its transmission beamforming taking into account the reception of the synchronization sequence. Hence the non-anchor base node is able to send a message to the wireless terminal by means of such beamformed transmission scheme and consequently start the communication session.

According to another embodiment it is further proposed the step for the anchor base node of sending a corresponding response identifier to the wireless terminal, and wherein the step of sending a message to the wireless terminal further comprises for the non-anchor base node incorporating the response identifier in said message.

With that embodiment the wireless terminal is informed in conjunction with the instructions received from the anchor base node about a response identifier. That response identifier is consequently used by the non-anchor base node for sending in the message to the wireless terminal after detecting the synchronization sequence. Such response identifier may be an identifier known to the cellular network relating to the wireless terminal, like a Radio Network Temporary Identifier (RNTI). In that case the non-anchor base node may retrieve this identifier from another cellular network component, like the HSS.

It allows the wireless terminal to detect, if the correctly envisaged non-anchor base node is sending the message. This is important as another non-anchor base node might not fit to the communication request.

According to a second aspect of the invention it is proposed a cellular network comprising at least one anchor base node and at least one non-anchor base node, the anchor base node being capable of broadcasting at least one signal channel, the non-anchor base node being capable of beamforming based communication, wherein for the setting up a communication link with a wireless terminal the anchor base node is configured to:
- receive from the wireless terminal a communication request comprising a request to communicate with the at least one non-anchor base node,
- inform the at least one non-anchor base node about the retrieved communication request,
- instruct the requesting wireless terminal to transmit a synchronization sequence,
further the non-anchor base node is configured to:
- scan its coverage area for reception of the synchronization sequence and
- adapt transmit beamforming related to the reception of said synchronization sequence from the wireless terminal, and
- send a message to the wireless terminal using said transmit beamforming.

The second aspect shares the advantages of the first aspect of the invention.

The cellular network according to that aspect comprises a plurality of base nodes, among these anchor base nodes and non-anchor base nodes. These base nodes comprise transmitting and receiving circuitry to the air interface, but also on a - typically wired - interface to the cellular network. Preferably the cellular network comprises additional components.

According to a preferred embodiment the at least one anchor base node is configured to estimate which of the at least one non-anchor base nodes is capable of serving the wireless terminal, whereby each of the estimated non-anchor base node is informed about the retrieved communication request, wherein the estimating comprises:
- receiving measurement message relating to total received wideband power transmitted by wireless terminal,
- and wherein the step of estimating considers said measurement message. With this embodiment the at least one anchor base node is configured to estimate the at least one non-anchor base node fitting best for the requesting wireless terminals, whereby the measurement message received from the wireless terminal is used.

Advantageously the anchor base node is further configured to provide the non-anchor base node with additional information for the scanning of its coverage area for a wireless terminal, such additional information comprising at least one out of the group of:
- angle of arrival information relating to the wireless terminal,
- a transmission pattern, indicating on which time frame and/or frequency the synchronization sequence is broadcasted by the wireless terminal.

With that embodiment the anchor base node is capable of easing for the non-anchor base node to detect the requesting wireless terminal. This is achieved on the one hand by the transmission pattern, which indicates parameters about the transmission of the synchronization sequence, the wireless terminal is supposed to transmit.

Additionally or alternatively the anchor base node determined an angle of arrival relating to the wireless terminal, which depicts geospatial information of signals retrieved from the wireless terminal, preferably said measurement message.

After the non-anchor base node detected the wireless terminal, the non-anchor base node is preferably further configured to send to the wireless terminal in conjunction with sending the message a set of cell-specific information. Such information are a replacement for the system information which are known to be transmitted by means of a broadcast. As such broadcast is not available for the non-anchor base nodes, this kind of dedicated messaging is supposed to substitute the system information broadcast according to present invention.

Such cell-specific information may in particular be transmitted on demand from the wireless terminal. Such on demand request may in particular be restricted to specific cell-specific information, as the wireless terminal may already have some of these cell-specific information available, e.g. from the anchor base node or a previous connection to the current non-anchor base node.

Preferably the anchor base node is further comprising a memory, and the anchor base node is configured to store in said memory an indication about the non-anchor base node where the wireless terminal is assigned to, and wherein the estimation of the non-anchor base node for the wireless terminal considers the stored non-anchor base node.

With that embodiment the estimation step is simplified, which in particular applies to stationary wireless terminals. In that sense it is very likely when a wireless terminal was previously successfully operating with a certain non-anchor base node that the same non-anchor base node is appropriate again.

This is in particular true when the type of data connection requested by the wireless terminal does not differ as well, as in so far no different capabilities of the requests serving non-anchor base node is necessary.

According to a third aspect of the invention it is proposed a wireless configured to operate with a cellular network according to the second aspect of the invention, wherein the wireless terminal is configured to camp on an anchor base node of the cellular network,
to send a communication request to the anchor base node,
to receive from the anchor base node an instruction to transmit a synchronization sequence,
to broadcast the synchronization sequence,
in case of reception of a message from a non-anchor base node responding to the sent synchronization sequence, set up a communication link with the non-anchor base node.

According to this aspect it is proposed a wireless terminal for operating in a cellular network as mentioned before. Such wireless terminal in particular comprises transmitting and receiving circuitry for wireless transmissions from a base node of the cellular network. Preferably the transmitting and receiving circuitry are implemented in one joint component, the transceiver. Additionally processing circuitry, memory and an antenna are available in the wireless terminal and used for executing the envisaged tasks.

The wireless terminal is configured to set up a communication connection with the cellular network by first camping on an anchor base node, and then sending a communication request to the anchor base node. The communication request in particular comprises indications that the anchor base node might not be capable of serving the request and therefore a communication with a non-anchor base node is initiated.

After reception of the instruction from the anchor base node, the wireless terminal is configured to submit a synchronization sequence, preferably following a transmission profile additionally being transmitted with the instruction from the anchor base node. When the wireless terminal receives a message from a non-anchor base node as a response to the transmission of the synchronizations sequence, the communication link can be set up with the non-anchor base node. Preferably such message comprises a response indicator which is useful for identification that the good non-anchor base node send the message. Should another wireless terminal be operating in proximity to the current wireless terminal the message from the non-anchor base node, which is still prior to opening a connection, including a joint transmission scheme, might be receivable by both wireless terminals.

In particular the wireless terminal is camping on the non-anchor base node now.

According to another preferred embodiment it is proposed that the wireless terminal is further configured to reselect to the previous anchor base node after the communication link with the non-anchor base node is terminated.

This embodiment is advantageous for the situation that the communication session with the non-anchor base node is closed, or through radio link failures has ceased. Preferably the wireless terminal has stored with which anchor base node the wireless terminal has communicated for setting up the communication session with the non-anchor base node.

Further the wireless terminal preferably stores with which non-anchor base node it has communicated earlier. This is in particular advantageous for a stationary device. Such information is in particular provided to the anchor base node upon requesting for a communication session, and helps the anchor base node estimating which non-anchor base node is appropriate for the requesting wireless terminal.

Additionally it is proposed for the wireless terminal that the communication request sent to the anchor base node comprises capability information relating to the network capabilities of the wireless terminal.

Such a capability information message informs the anchor base node about the way the wireless terminal is able to communicate. This may relate to the data transmission rates, MIMO capabilities, etc. but may also be communication session specific, e.g. relating to quality of service for specific data to be sent or received.

In effect these capability information are helpful for the anchor base node to decide which type of non-anchor base node are estimated for setting up the connection, if any.

Alternatively such capability information, as long as they are terminal specific, are already transmitted upon camping on the anchor base node, so that the communication request, which shall start the actual connection, is relieved from such additional information.

As it is shown this invention advantageously solves the depicted problem and offers a solution how a wireless terminal in the coming technology standard may smoothly set up a connection with high performance base nodes.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents the situation of a wireless terminal operating in the cellular network of the type to which the present invention is applied as an embodiment;
- Fig. 2: shows a sequence diagram for setting up a connection according to an embodiment of present invention.

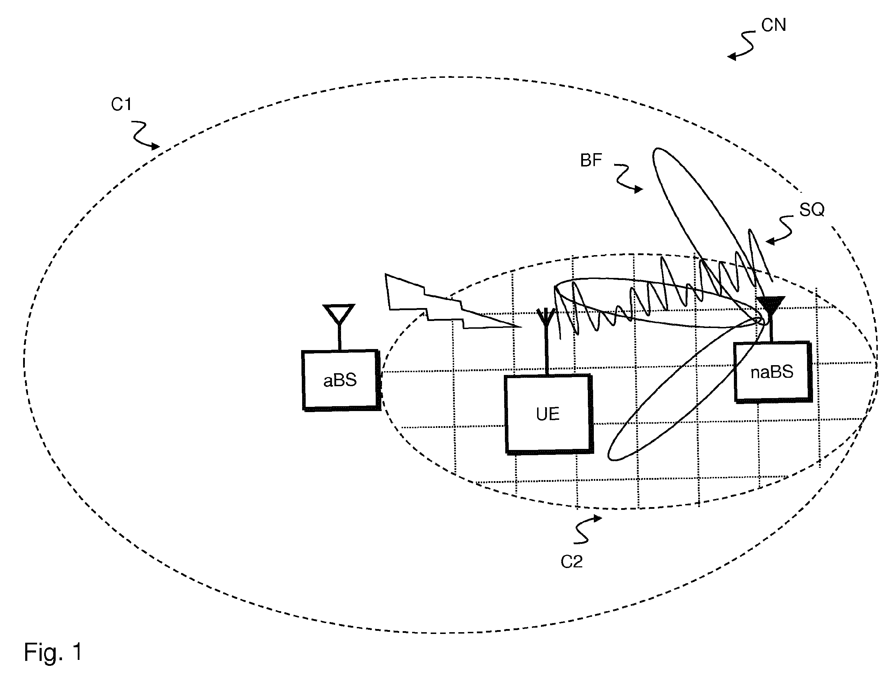

FIG. 1 schematically shows a wireless terminal UE of the type to which the present invention is applied as an embodiment, situated in the coverage area C1 of an anchor base node aBS being part of a cellular network CN. The cellular network CN preferably comprises more anchor base nodes aBS, which are not shown here, as well as network component for controlling the shown base nodes.

As it can be seen, the wireless terminal additionally is situated in a coverage area C2 of a non-anchor base node naBS. In this exemplifying embodiment both coverage areas C1 and C2 have different size, while coverage area C2 is fully fitting in coverage area C1. Different scenarios may be possible, wherein a plurality of non-anchor base node coverage areas may fit into the coverage area C1 of the anchor base node. Further the coverage area C2 of the non-anchor base node might be situated within more than one coverage area of anchor base nodes, in particular when the latter are overlapping.

Preferably the anchor base node aBS is aware of the non-anchor base nodes naBS situated within or in proximity of at least its coverage area C1.

The more non-anchor base nodes are available in the coverage area C1 of an anchor base node, the higher is the choice for the anchor base node to estimate which non-anchor base node might be appropriate for setting up a requested communication sessions.

As it is indicated the non-anchor base nodes has a plurality of beams BF, which are dedicated for tuning on a wireless terminal UE that is supposed to setup a communication session for high capacity data transmissions. Only wireless terminals located within one of these beams are capable of receiving messages from the non-anchor base node. Typically the non-anchor base node is configured to scan through each section of the coverage area C2, indicated by the checkered pattern, either with a single beam or with multiple beams in parallel which are partially overlapping and covering the coverage area C2.

Further it is shown in this figure, that the wireless terminal is transmitting a synchronization sequence SQ, which is composed that way that it is sufficient to identify the wireless terminal and to distinguish it from other wireless terminal also aiming to set up a communication session with a non-anchor base node.

The synchronization sequence is detected by the non-anchor base node naBS while scanning and monitoring its coverage area C2. After the synchronization sequence is detected the non-anchor base node can retune one of its beams BF and the high data rate communication session can be setup between wireless terminal and non-anchor base node.

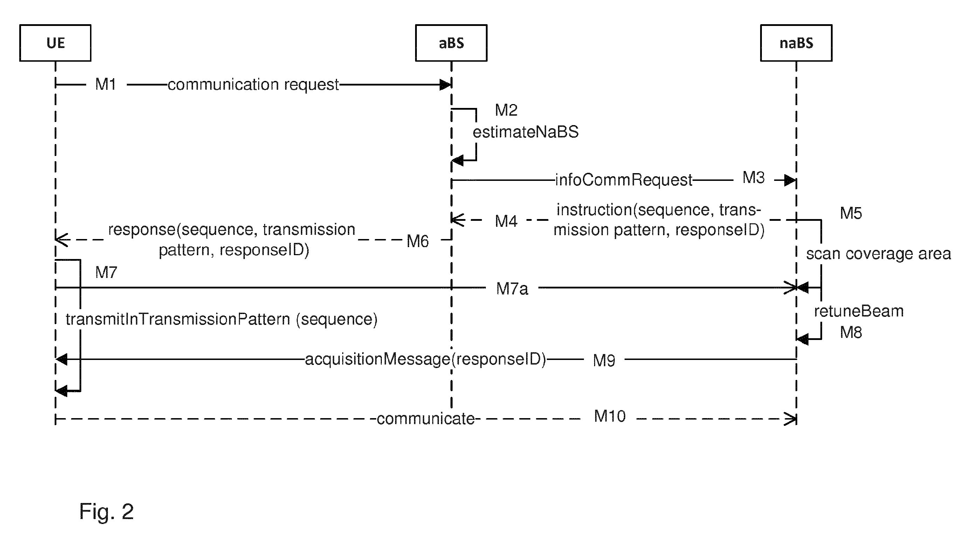

An advantageous way of setting up a communication session between a wireless terminal UE and a non-anchor base node naBS is shown in FIG. 2.

The shown procedure starts from the situation of the wireless terminal UE camping on the anchor base node aBS. As the anchor base node is preferably designed similar to eNodeBs or nodeBs known from previous technology standards, the registration and camping on such anchor base node is preferably not materially changed compared to those procedures concerning camping on legacy base nodes.

When the wireless terminal is about to setup a mobile originated (MO) communication session, it starts by sending a communication request M1 to the anchor base node aBS it is currently camping on.

In case of a mobile terminated (MT) communication the wireless terminal is paged by the anchor base node, where the wireless terminal is camping on. Upon the wireless terminal's response to the paging, preferably comprising its capabilities and an indication about the location of the wireless terminal, the procedure according to the invention is started. The communication request M1 mentioned hereafter covers both messages from the wireless terminal, for MO and MT communication.

Preferably this communication request comprises additional information that helps the anchor base node selecting an appropriate non-anchor base node. Such additional information in particular encompass band capability, service capability and/or spatial information.

Upon reception of that communication request, the anchor base node aBS starts with the procedure M2 of estimating an appropriate non-anchor base node naBS. The result of this operation is at least one non-anchor base node.

The anchor base nodes and the non-anchor base nodes have a direct or indirect communication channel within the cellular network. By using this communication channel, the anchor base node sends an information indicating the received communication request M3 to the non-anchor base node naBS. With this the non-anchor base node is informed about the fact that the wireless terminal UE is requesting a high data rate connection within the cellular network.

According to the shown advantageous embodiment the non-anchor base node collects resp. determines a couple of additional information useful for fulfilling the communication request. These information are returned in the response message M4 to the anchor base node.

Among this is the synchronization sequence, the non-anchor base nodes expects to receive from a wireless terminal. Preferably the non-anchor base node sends an indication about which synchronization sequence is expected.

The wireless terminal is expected to have a repository of synchronization sequences stored. If not, it may request the anchor base node for providing the synchronization sequence.

Further the transmission pattern is provided. This transmission pattern comprises parameter, or a representative thereof, describing the way the synchronization sequence is expected to be transmitted by the requesting wireless terminal. This encompasses a transmission frequency, resp. channel, time resources when it is submitted and/or potential frequency hopping sequence in the supported frequency band.

Additionally a response ID is submitted with response message M4, which identifies the requesting wireless terminal. Preferably the non-anchor base node naBS requested from the cellular network a RNTI for assuring the unique identification.

When this response message M4 is submitted, two parallel activities are started. One the one hand the non-anchor base nodes starts scanning its coverage area M5, in order to detect the requested synchronization sequence on the designated transmission frequency at the designated time resources.

On the other hand the anchor base node receives the response message M4 and basically forwards the retrieved information with response message M6 to the requesting wireless terminal. This message is preferably the direct response to the communication request M1. It is further possible, that wireless terminal UE and anchor base node aBS have an asynchronous communication, wherein the wireless terminal regularly requests for an answer for its communication request M1.

Upon reception of response message M6 the wireless terminal then starts with transmission of the synchronization sequence according to the provided transmission pattern M7. This is procedure that is repeatedly done. At one point in time one of the transmissions M7a is received by the non-anchor base node during its scanning of the coverage area M5. In case in a predetermined time period no message from a non-anchor base node is retrieved at the wireless terminal, then the communication request fails, or a retry is carried out, preferably with another non-anchor base node.

When the scan of the coverage area is successful on the non-anchor base node site, the scanning is stopped, and the beamforming is retuned to fit to the found wireless terminal. For this in particular the location in the coverage area is considered. For finalizing the communication setup, at first an acquisition message M9 is sent to the wireless terminal by means of said beamformed communication. As part of this acquisition message the response ID which was earlier provided with response M4 to the anchor base node is transmitted again.

With that response ID the wireless terminal after reception of the acquisition message M9 is able to identify that the message is dedicated to itself.

When this point is reached, the wireless terminal and the non-anchor base node are acquainted to each other and can now setup a camping relationship and consequently a communication connection M10.

Further on the procedure can be simplified when the wireless terminal is requesting again for a communication setup, and is operating stationary. With a stored identifier of the previously used non-anchor base node, the setup may be simplified, as e.g. the transmission pattern etc. is already known. After ending the communication connection, the wireless terminal preferably reselects to an anchor base node aBS, preferably the previously used anchor base node.

It becomes apparent that the exemplary embodiment of the invention solves the addressed problem in a reliable way and thus allows setting up high data rate connections with dedicated base nodes for doing so.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for a cellular network of setting up a communication link with a wireless terminal, the cellular network comprising at least one anchor base node and at least one non-anchor base node, the anchor base node being capable of broadcasting at least one signal channel, the non-anchor base node being capable of beamforming based communication,
comprising the step for the anchor base node of:
- receiving from the wireless terminal a communication request comprising a request to communicate with at least one of the non-anchor base node,
- informing the at least one non-anchor base node about the retrieved communication request,
- instructing the requesting wireless terminal to transmit a synchronization sequence,
further comprising the steps for the non-anchor base node of:
- scanning its coverage area for receiving of the synchronization sequence and
- adapting transmit beamforming related to the reception of said synchronization sequence from the wireless terminal, and
- sending a message to the wireless terminal, using said transmit beamforming.

2. Method according to claim 1,
further comprising the step for the anchor base node of estimating which of the at least one non-anchor base nodes is capable of serving the wireless terminal, and wherein the step of informing the non-anchor base node is carried out for each of the estimated non-anchor base node.

3. Method according to claim 2,
wherein the step of estimating comprises:
- receiving measurement message relating to total received wideband power transmitted by wireless terminal,
- and wherein the step of estimating considers said measurement message.

4. Method according to at least one of the previous claims,
wherein the synchronization sequence is determined by at least one out of the group of:
- selecting in the wireless terminal from a list of predefined synchronization sequence based on received instruction,
- creating synchronization sequence in the wireless terminal by receiving parameters for a given calculation method,
- providing the raw synchronization sequence by one out of the anchor base node and non-anchor base node.

5. Method according to at least one of the previous claims,
wherein the step of instructing the wireless terminal further comprises the step of transmitting a transmission pattern for said synchronization sequence comprising at least one out of:
- selecting a transmission frequency,
- selecting time resources,
- selecting a frequency hopping sequence.

6. Method according to claim 5,
further comprising the step for the non-anchor base node of:
- creating instruction for transmission of at least one of the synchronization sequence and the transmission pattern,
- sending said instruction to the anchor base node for forwarding to the wireless terminal.

7. Method according to claim 5,
further comprising the step for the anchor base node of:
- creating instruction for transmission of the synchronization sequence and the transmission pattern to the wireless terminal,
- forwarding at least information relating to said synchronization sequence to the non-anchor base node.

8. Method according to at least one of the previous claims,
further comprising the step for the anchor base node of sending a corresponding response identifier to the wireless terminal,
and wherein the step of sending a message to the wireless terminal further comprises for the non-anchor base node incorporating the response identifier in said message.

9. Cellular network comprising at least one anchor base node and at least one non-anchor base node, the anchor base node being capable of broadcasting at least one signal channel, the non-anchor base node being capable of beamforming based communication,
wherein for the setting up a communication link with a wireless terminal the anchor base node is configured to:
- receive from the wireless terminal a communication request comprising a request to communicate with the at least one non-anchor base node,
- inform the at least one non-anchor base node about the retrieved communication request,
- instruct the requesting wireless terminal to transmit a synchronization sequence,
further the non-anchor base node is configured to:
- scan its coverage area for reception of the synchronization sequence and
- adapt transmit beamforming related to the reception of said synchronization sequence from the wireless terminal, and
- send a message to the wireless terminal using said transmit beamforming.

10. Cellular network according to claim 9,
wherein the anchor base node is configured to estimate which of the at least one non-anchor base nodes is capable of serving the wireless terminal, whereby each of the estimated non-anchor base node is informed about the retrieved communication request,
wherein the estimating comprises:
- receiving measurement message relating to total received wideband power transmitted by wireless terminal,
- and wherein the step of estimating considers said measurement message.

11. Cellular network according to at least one of the claims 9 or 10,
wherein the anchor base node is further configured to provide the non-anchor base node with additional information for the scanning of its coverage area for a wireless terminal,
such additional information comprising at least one out of the group of
- angle of arrival information relating to the wireless terminal,
- a transmission pattern, indicating on which time frame and/or frequency the synchronization sequence is broadcasted by the wireless terminal.

12. Wireless terminal configured to operate with a cellular network according to claim 9,
wherein the wireless terminal is configured to camp on an anchor base node of the cellular network,
to send a communication request to the anchor base node,
to receive from the anchor base node an instruction to transmit a synchronization sequence,
to broadcast the synchronization sequence,
in case of reception of a message from a non-anchor base node responding to the sent synchronization sequence, set up a communication link with the non-anchor base node.

13. Wireless terminal according to claim 12,
further configured to measure the total received wideband power and to submit a measurement message relating to said total received wideband power to the anchor base node in conjunction with the sending of the communication request.

14. Wireless terminal according to at least one of the claims 12 or 13,
further configured to receive from the anchor base node a response indicator, and to set up the communication link with the non-anchor base node only in case received message from non-anchor base node incorporates said response indicator.

15. Wireless terminal according to at least one of the claims 12 to 14,
further configured to reselect to the previous anchor base node after the communication link with the non-anchor base node is terminated.

16. Wireless terminal according to at least one of the claims 12 to 15,
wherein the communication request sent to the anchor base node comprises capability information relating to the network capabilities of the wireless terminal.
